# EUROPEAN PATENT APPLICATION

(11) **EP 4 371 766 A1**
(43) Date of publication of application: **22.05.2024**
(21) Application number: 22842029.5
(22) Date of filing: 07.07.2022
(51) Int. Cl.: B32B 27/00

(54) **LAMINATE OF INORGANIC SUBSTRATE AND HEAT-RESISTANT POLYMER FILM**

(30) Priority: 16.07.2021 JP 2021117966
(71) Applicant: TOYOBO CO., LTD., Osaka-shi, Osaka 530-0001 (JP)
(72) Inventor: TOKUDA, Kaya, Otsu-shi, Shiga 520-0292 (JP); OKUYAMA, Tetsuo, Otsu-shi, Shiga 520-0292 (JP); MAEDA, Satoshi, Otsu-shi, Shiga 520-0292 (JP); YONEMUSHI, Harumi, Otsu-shi, Shiga 520-0292 (JP); MIZUGUCHI, Denichirou, Otsu-shi, Shiga 520-0292 (JP)
(74) Representative: Vossius & Partner Patentanwälte Rechtsanwälte mbB
(86) International application number: PCT/JP2022/026927
(87) International publication number: WO 2023/286685

(57) **Abstract**

Provided is an inorganic substrate/heat-resistant polymer film laminate in which vibration during handling is suppressed. A laminate of a heat-resistant polymer film and an inorganic substrate that uses substantially no adhesive is characterized by that a shear peel strength between the heat-resistant polymer film and the inorganic substrate is 0.8 MPa or more and a tensile modulus of the heat-resistant polymer film is 4-9 GPa.

## Description

### TECHNICAL FIELD

The present invention relates to a laminate in which a heat-resistant polymer film of a polyimide-based resin or the like is formed on an inorganic substrate. The laminate of the present invention is useful, for example, when a flexible device and a flexible wiring board in which an electronic element is formed on the surface of a flexible substrate are manufactured.

### BACKGROUND ART

As substrate materials for the manufacture of flexible electronic devices, the use of heat-resistant polymer films such as polyimide (hereinafter also simply referred to as "polymer films") has been studied. Since these polymer films such as polyimide are manufactured in long roll shapes, it is generally accepted that a roll-to-roll manufacturing line is ideal for the manufacture of flexible devices as well.

Meanwhile, in a large number of conventional electronic devices such as display devices, sensor arrays, touch screens and printed wiring boards, hard and rigid substrates such as glass substrates, semiconductor wafers, or glass fiber reinforced epoxy substrates are used, and the manufacturing equipment is also configured on the premise of using such rigid substrates.

Based on this background, as a technique of manufacturing flexible electronic devices using existing manufacturing equipment, there are known techniques of manufacturing flexible electronic devices in the procedure of handling a polymer film in a state of being temporarily pasted to a rigid inorganic substrate such as a glass substrate used as a temporary support, processing an electronic device on the polymer film, and then peeling off the polymer film on which the electronic device is formed from the temporary support. (Patent Document 1)

As a technique of manufacturing flexible electronic devices using existing manufacturing equipment, there are known techniques of manufacturing flexible electronic devices by applying a polymer solution or a polymer precursor solution to a rigid substrate such as a glass substrate used as a temporary support, and drying the solution to form a precursor film, then converting the precursor into a polymer film by causing a chemical reaction to obtain a laminate of a temporary support and a polymer film, forming an electronic device on the polymer film in the same manner, and then peeling off the polymer film. (Patent Document 2)

However, in the process of forming a desired functional element on a laminate in which a polymer film and a support formed of an inorganic substance are bonded together, the laminate is often exposed to a high temperature. For example, in the formation of functional elements such as polysilicon and oxide semiconductors, a step performed in a temperature region of about 200°C to 600°C is required. A temperature of about 200°C to 300°C may be applied to the film in the fabrication of a hydrogenated amorphous silicon thin film, and further heating at about 450°C to 600°C may be required in order to heat and dehydrogenate amorphous silicon and obtain low-temperature polysilicon. Hence, the polymer film constituting the laminate is required to exhibit heat resistance, but as a matter of fact, polymer films which can withstand practical use in such a high temperature region are limited, and polyimide is selected in many cases.

In other words, in any technique, a laminate in a state where a rigid temporary support and a polymer film layer that is finally peeled off and becomes the substrate of a flexible electronic device are superimposed one on the other is used. The laminate can be handled as a rigid plate material, and can be thus handled in the same manner as a glass substrate in equipment for manufacturing liquid crystal displays, plasma displays, organic EL displays, or the like using conventional glass substrates.

### PRIOR ART DOCUMENT

### PATENT DOCUMENTS

Patent Document 1: JP-B2-5152104
Patent Document 2: JP-B2-5699606

### SUMMARY OF THE INVENTION

### PROBLEMS TO BE SOLVED BY THE INVENTION

A laminate of a heat-resistant polymer film and an inorganic substrate is handled using a robot fork or a vacuum lifter for glass transport in the display manufacturing process. When the direction of the laminate is changed in a state of being gripped by such transport equipment, a twisting force is applied in the plane direction, and there is a problem that the heat-resistant polymer film peels off from the inorganic substrate. In particular, in a case where the size of the laminate is large, specifically when one side is 400 mm or more, the shearing force applied to the position away from the rotation axis during change of direction increases, and peeling off of the heat-resistant polymer film from the inorganic substrate is likely to occur.

Therefore, the present invention is to solve the above-mentioned problems, and an object thereof is to provide a laminate of an inorganic substrate and a heat-resistant polymer film in which peeling of the heat-resistant polymer film from the inorganic substrate is suppressed during handling, particularly during change of direction of the laminate.

### MEANS FOR SOLVING THE PROBLEMS

As a result of intensive studies to solve the above-mentioned problems, the present inventors have found out that it is possible to suppress swinging of the laminate by setting the shear peel strength between the inorganic substrate and the heat-resistant polymer film to a certain level or higher, and have completed the present invention.

In other words, the present invention includes the following configurations.

[1] A laminate of a heat-resistant polymer film and an inorganic substrate formed substantially without using an adhesive, in which
   a shear peel strength between the heat-resistant polymer film and the inorganic substrate is 0.8 MPa or more, and
   a tensile modulus of the heat-resistant polymer film is 4 GPa or more and 9 GPa or less.
[2] The laminate according to [1], in which the laminate has an amount of warpage of 300 µm or less after being heated at 280°C for 1 hour.
[3] The laminate according to [1] or [2], in which a storage modulus of the heat-resistant polymer film at 280°C is 9 GPa or less.
[4] The laminate according to any one of [1] to [3], in which a diameter of a circumscribed circle of the laminate is 500 mm or more.
[5] The laminate according to any one of [1] to [4], in which the heat-resistant polymer film includes at least one selected from the group consisting of polyimide, polyamide, and polyamide-imide.
[6] The laminate according to any one of [1] to [5], in which the heat-resistant polymer film is a transparent polyimide film.

### EFFECT OF THE INVENTION

In the laminate of the present invention, the shear peel strength between the inorganic substrate and the heat-resistant polymer film is high, and peeling off of the inorganic substrate and the heat-resistant polymer film from each other can be suppressed during mechanical handling. In particular, the present invention is effective in systems using large-sized inorganic substrates in which the force (twist) in the plane direction applied to the inorganic substrate increases during change of direction.

### BRIEF DESCRIPTION OF THE DRAWINGS

Fig. 1 is a schematic diagram illustrating an example of a silane coupling agent applying apparatus according to an embodiment of the present invention.
Fig. 2 is a diagram illustrating definition of an amount of warpage in the present invention. Fig. 2(a) is a schematic diagram of an example in which a laminate is warped toward a heat-resistant polymer side, and Fig. 2(b) is a schematic diagram of an example in which a laminate is warped toward an inorganic substrate side.
Fig. 3 is a schematic diagram of a sample for shear peel strength measurement in the present invention. Fig. 3(a) is a plan view of the measurement sample, and Fig. 3(b) is a cross-sectional view of the measurement sample.
Fig. 4 is a schematic diagram of an apparatus for measuring warpage during heating in the present invention.

### MODE FOR CARRYING OUT THE INVENTION

Hereinafter, embodiments of the present invention will be described.

### <Heat-resistant polymer film>

Examples of the heat-resistant polymer film of the present invention (hereinafter, also simply referred to as polymer film) includes films of polyimide-based resins (for example, aromatic polyimide resin and alicyclic polyimide resin) such as polyimide, polyamide-imide, polyetherimide, and fluorinated polyimide; polyolefin-based resins such as polyethylene and polypropylene; copolymerized polyesters (for example, fully aromatic polyesters and semi-aromatic polyesters) such as polyethylene terephthalate, polybutylene terephthalate, and polyethylene-2,6-naphthalate; copolymerized (meth)acrylates represented by polymethylmethacrylate; polycarbonates; polyamides; polysulfones; polyethersulfones; polyetherketones; cellulose acetates; cellulose nitrates; aromatic polyamides; polyvinyl chloride; polyphenols; polyarylates; polyphenylene sulfides; polyphenylene oxides; and polystyrenes. The heat-resistant polymer film of the present invention preferably includes at least one selected from the group consisting of polyimide, polyamide, and polyamide-imide among these.

However, since the polymer film is premised on being used in a process involving heat treatment at 300°C or more, those that can actually be adopted among the exemplified polymer films are limited. Among the polymer films, films obtained using so-called super engineering plastics are preferable, and more specific examples thereof include polyimide-based resins, polyamide-based resins, polyamide-imide-based resins, and azole-based resins. Particularly preferred specific examples thereof include aromatic polyimide films, aromatic amide films, aromatic amide-imide films, aromatic benzoxazole films, aromatic benzothiazole films, and aromatic benzimidazole films.

The details of the polyimide-based resin films (referred to as polyimide films in some cases) which are an example of the polymer film will be described below. Generally, the polyimide-based resin film is obtained by a method in which a polyamic acid (polyimide precursor) solution, which is obtained by a reaction of a diamine with a tetracarboxylic acid in a solvent, is applied to a support for polyimide film fabrication and dried to form a green film (hereinafter also referred to as "polyamic acid film"), and further the green film is treated by heat at a high temperature on the support for polyimide film fabrication or in a state of being peeled off from the support to conduct a dehydration ring-closure reaction, and a method in which a polyamic acid is imidized in a reaction vessel to obtain a polyimide solution, and then the polyimide solution is applied to a support for polyimide film fabrication and dried to form a film. Among these, the former method, which involves formation of a green film, is preferable. The polymer film obtained through formation of a green film may be a solvent-insoluble polyimide, so there is a wide variety of monomers to choose from. Therefore, a composition by which close contact property to the inorganic substrate is likely to be secured can be selected, and as a result, the shear peel strength with the inorganic substrate can be improved.

For the application of the polyamic acid (polyimide precursor) solution, it is possible to appropriately use, for example, conventionally known solution application means such as spin coating, doctor blade, applicator, comma coater, screen printing method, slit coating, reverse coating, dip coating, curtain coating, and slit die coating.

Diamines constituting polyamic acid are not particularly limited, and aromatic diamines, aliphatic diamines, alicyclic diamines and the like that are commonly used in polyimide synthesis may be used. From the viewpoint of heat resistance, aromatic diamines are preferable. The diamines can be used singly or in combination of two or more kinds thereof.

The diamines are not particularly limited, and examples thereof include 4,4'-diaminobenzanilide, 4,4'-diamino-2,2'-bis(trifluoromethyl)biphenyl, 5-amino-2-(p-aminophenyl)benzoxazole, 1,3-bis(4-aminophenoxy)benzene, oxydianiline(bis(4-aminophenyl)ether), and paraphenylenediamine(1,4- phenylenediamine).

As tetracarboxylic acids constituting polyamic acid, aromatic tetracarboxylic acids (including anhydrides thereof), aliphatic tetracarboxylic acids (including anhydrides thereof) and alicyclic tetracarboxylic acids (including anhydrides thereof), which are usually used for polyimide synthesis, can be used. In a case where these are acid anhydrides, the acid anhydrides may have one anhydride structure or two anhydride structures in the molecule, but one (dianhydride) having two anhydride structures in the molecule is preferable. The tetracarboxylic acids may be used singly or in combination of two or more kinds thereof.

The tetracarboxylic acids are not particularly limited, and examples thereof include pyrolimetic dianhydride, 3,3',4,4'-biphenyltetracarboxylic dianhydride, 4,4'-oxydiphthalic dianhydride, 3,3'-diaminodiphenylsulfone, and 4,4'-diaminodiphenylsulfone.

The polyimide film may be a transparent polyimide film.

Colorless and transparent polyimide, which is an example of the polymer film, will be described. In order to avoid complication, colorless and transparent polyimide is simply referred to as transparent polyimide. As the transparency of transparent polyimide, it is preferable that the total light transmittance is 75% or more. The total light transmittance is more preferably 78% or more, still more preferably 80% or more, yet still more preferably 82% or more, particularly preferably 84% or more. The upper limit of the total light transmittance of transparent polyimide is not particularly limited, but is preferably 98% or less, more preferably 97% or less for use as a flexible electronic device. The colorless and transparent polyimide in the present invention is preferably polyimide having a total light transmittance of 75% or more. The method for measuring total light transmittance of the polymer film is as described in Examples.

Examples of the aromatic tetracarboxylic acids for obtaining highly colorless and transparent polyimide include tetracarboxylic acids such as 4,4'-(2,2-hexafluoroisopropyridene)diphthalic acid, 4,4'-oxydiphthalic acid, bis(1,3-dioxo-1,3-dihydro-2-benzofuran-5-carboxylic acid) 1,4-phenylene, bis(1,3-dioxo-1,3-dihydro-2-benzofuran-5-yl)benzene-1,4-dicarboxylate, 4,4'-[4,4'-(3-oxo-1,3-dihydro-2-benzofuran-1,1-diyl) bis(benzene-1,4-diyloxy)]dibenzene-1,2-dicarboxylic acid, 3,3',4,4'-benzophenonetetracarboxylic acid, 4,4'-[(3-oxo-1,3-dihydro-2-benzofuran-1,1-diyl) bis(toluene-2,5-diyloxy)]dibenzene-1,2-dicarboxylic acid, 4,4'-[(3-oxo-1,3-dihydro-2-benzofuran-1,1-diyl) bis(1,4-xylene-2,5-diyloxy)]dibenzene-1,2-dicarboxylic acid, 4,4'-[4,4'-(3-oxo-1,3-dihydro-2-benzofuran-1,1-diyl) bis(4-isopropyltoluene-2,5-diyloxy)]dibenzene-1,2-dicarboxylic acid, 4,4'-[4,4'-(3-oxo-1,3-dihydro-2-benzofuran-1,1-diyl) bis(naphthalene-1,4-diyloxy)]dibenzene-1,2-dicarboxylic acid, 4,4'-[4,4'-(3H-2,1-benzoxathiol-1,1-dioxide-3,3-diyl) bis(benzene-1,4-diyloxy)]dibenzene-1,2-dicarboxylic acid, 4,4'-benzophenone tetracarboxylic acid, 4,4'-[(3H-2,1-benzoxathiol-1,1-dioxide-3,3-diyl) bis(toluene-2,5-diyloxy)]dibenzene-1,2-dicarboxylic acid, 4,4'-[(3H-2,1-benzoxathiol-1,1-dioxide-3,3-diyl) bis(1,4-xylene-2,5-diyloxy)]dibenzene-1,2-dicarboxylic acid, 4,4'-[4,4'-(3H-2,1-benzoxathiol-1,1-dioxide-3,3-diyl) bis(4-isopropyltoluene-2,5-diyloxy)]dibenzene-1,2-dicarboxylic acid, 4,4'-[4,4'-(3H-2,1-benzoxathiol-1,1-dioxide-3,3-diyl) bis(naphthalene-1,4-diyloxy)]dibenzene-1,2-dicarboxylic acid, 3,3',4,4'-benzophenonetetracarboxylic acid, 3,3',4,4'-benzophenonetetracarboxylic acid, 3,3',4,4'-diphenylsulfonetetracarboxylic acid, 3,3',4,4'-biphenyltetracarboxylic acid, 2,3,3',4'-biphenyltetracarboxylic acid, pyromellitic acid, 4,4'-[spiro(xanthene-9,9'-fluorene)-2,6-diyl bis(oxycarbonyl)]diphthalic acid, and 4,4'-[spiro(xanthene-9,9'-fluorene)-3,6-diyl bis(oxycarbonyl)] diphthalic acid, and acid anhydrides thereof. Among these, dianhydrides having two acid anhydride structures are suitable, and particularly 4,4'-(2,2-hexafluoroisopropyridene)diphthalic dianhydride and 4,4'-oxydiphthalic dianhydride are preferable. The aromatic tetracarboxylic acids may be used singly or in combination of two or more kinds thereof. In a case of regarding heat resistance as important, the amount of the aromatic tetracarboxylic acids copolymerized is, for example, preferably 50% by mass or more, more preferably 60% by mass or more, still more preferably 70% by mass or more, yet still more preferably 80% by mass or more, particularly preferably 90% by mass or more of the total amount of all the tetracarboxylic acids, and may be 100% by mass.

Examples of the alicyclic tetracarboxylic acids include tetracarboxylic acids such as 1,2,3,4-cyclobutanetetracarboxylic acid, 1,2,3,4-cyclopentanetetracarboxylic acid, 1,2,3,4-cyclohexanetetracarboxylic acid, 1,2,4,5-cyclohexanetetracarboxylic acid, 3,3',4,4'-bicyclohexyltetracarboxylic acid, bicyclo[2,2,1]heptane-2,3,5,6-tetracarboxylic acid, bicyclo[2,2,2]octane-2,3,5,6-tetracarboxylic acid, bicyclo[2,2,2]octo-7-ene-2,3,5,6-tetracarboxylic acid, tetrahydroanthracene-2,3,6,7-tetracarboxylic acid, tetradecahydro-1,4:5,8:9,10-trimethanoanthracene-2,3,6,7-tetracarboxylic acid, decahydronaphthalene-2,3,6,7-tetracarboxylic acid, decahydro-1,4:5,8-dimethanonaphthalene-2,3,6,7-tetracarboxylic acid, decahydro-1,4-ethano-5,8-methanonaphthalene-2,3,6,7-tetracarboxylic acid, norbornane-2-spiro-α-cyclopentanone-α'-spiro-2"-norbornane-5,5",6,6"-tetracarboxylic acid (also known as "norbornane-2-spiro-2'-cyclopentanone-5'-spiro-2"-norbornane-5,5",6,6"-tetracarboxylic acid"), methylnorbornane-2-spiro-α-cyclopentanone-α'-spiro-2"-(methylnorbornane)-5,5' , 6, 6"-tetracarboxylicacid, norbornane-2-spiro-α-cyclohexanone-α'-spiro-2"-norbornane-5,5",6,6"-tetracarboxylic acid (also known as "norbornane-2-spiro-2'-cyclohexanone-6'-spiro-2"-norbornane-5, 5",6, 6"-tetracarboxylic acid"), methylnorbornane-2-spiro-α-cyclohexanone-α'-spiro-2"-(methylnorbornane)-5,5",6,6"-tetracarboxylic acid, norbornane-2-spiro-α-cyclopropanone-α'-spiro-2"-norbornane-5,5",6,6"-tetracarboxylic acid, norbornane-2-spiro-α-cyclobutanone-α'-spiro-2"-norbornane-5,5",6,6"-tetracarboxylic acid, norbornane-2-spiro-α-cycloheptanone-α'-spiro-2"-norbornane-5,5",6,6"-tetracarboxylic acid, norbornane-2-spiro-α-cyclooctanone-α'-spiro-2"-norbornane-5,5",6,6"-tetracarboxylic acid, norbornane-2-spiro-α-cyclononanone-α'-spiro-2"-norbornane-5,5",6,6"-tetracarboxylic acid, norbornane-2-spiro-α-cyclodecanone-α'-spiro-2"-norbornane-5,5",6,6"-tetracarboxylic acid, norbornane-2-spiro-α-cycloundecanone-α'-spiro-2"-norbornane-5,5",6,6"-tetracarboxylic acid, norbornane-2-spiro-α-cyclododecanone-α'-spiro-2"-norbornane-5,5",6,6"-tetracarboxylic acid, norbornane-2-spiro-α-cyclotridecanone-α'-spiro-2"-norbornane-5,5",6,6"-tetracarboxylic acid, norbornane-2-spiro-α-cyclotetradecanone-α'-spiro-2"-norbornane-5,5",6,6"-tetracarboxylic acid, norbornane-2-spiro-α-cyclopentadecanone-α'-spiro-2"-norbornane-5,5",6,6"-tetracarboxylic acid, norbornane-2-spiro-α-(methylcyclopentanone)-α'-spiro-2"-norbornane-5,5",6,6"-tetracarboxylic acid, and norbornane-2-spiro-α-(methylcyclohexanone)-α'-spiro-2"-norbornane-5,5",6,6"-tetracarboxylic acid, and acid anhydrides thereof. Among these, dianhydrides having two acid anhydride structures are suitable, particularly 1,2,3,4-cyclobutanetetracarboxylic dianhydride, 1,2,3,4-cyclohexanetetracarboxylic dianhydride, and 1,2,4,5-cyclohexanetetracarboxylic dianhydride are preferable, 1,2,3,4-cyclobutanetetracarboxylic dianhydride and 1,2,4,5-cyclohexanetetracarboxylic dianhydride are more preferable, and 1,2,3,4-cyclobutanetetracarboxylic dianhydride is still more preferable. These may be used singly or in combination of two or more kinds thereof. In a case of regarding transparency as important, the amount of the aromatic tetracarboxylic acids copolymerized is, for example, preferably 50% by mass or more, more preferably 60% by mass or more, still more preferably 70% by mass or more, yet still more preferably 80% by mass or more, particularly preferably 90% by mass or more of the total amount of all the tetracarboxylic acids, and may be 100% by mass.

Examples of the tricarboxylic acids include aromatic tricarboxylic acids such as trimellitic acid, 1,2,5-naphthalenetricarboxylic acid, diphenyl ether-3,3',4'-tricarboxylic acid, and diphenylsulfone-3,3',4'-tricarboxylic acid, or hydrogenated products of the aromatic tricarboxylic acids such as hexahydrotrimellitic acid, and alkylene glycol bistrimellitates such as ethylene glycol bistrimellitate, propylene glycol bistrimellitate, 1,4-butanediol bistrimellitate, and polyethylene glycol bistrimellitate and monoanhydrides and esterified products thereof. Among these, monoanhydrides having one acid anhydride structure are suitable, and particularly trimellitic anhydride and hexahydrotrimellitic anhydride are preferable. These may be used singly or a plurality of these may be used in combination.

Examples of the dicarboxylic acids include aromatic dicarboxylic acids such as terephthalic acid, isophthalic acid, orthophthalic acid, naphthalenedicarboxylic acid, and 4,4'-oxydibenzenecarboxylic acid, or hydrogenated products of the aromatic dicarboxylic acids such as 1,6-cyclohexanedicarboxylic acid, and oxalic acid, succinic acid, glutaric acid, adipic acid, heptanedioic acid, octanedioic acid, azelaic acid, sebacic acid, undecanedioic acid, dodecanedioic acid, and 2-methylsuccinic acid and acid chlorides or esterified products thereof. Among these, aromatic dicarboxylic acids and hydrogenated products thereof are suitable, and particularly terephthalic acid, 1,6-cyclohexanedicarboxylic acid, and 4,4'-oxydibenzenecarboxylic acid are preferable. The dicarboxylic acids may be used singly or a plurality of these may be used in combination.

The diamines or isocyanates for obtaining highly colorless and transparent polyimide are not particularly limited, and it is possible to use aromatic diamines, aliphatic diamines, alicyclic diamines, aromatic diisocyanates, aliphatic diisocyanates, alicyclic diisocyanates and the like that are usually used in the polyimide synthesis, polyamide-imide synthesis, and polyamide synthesis. Aromatic diamines are preferable from the viewpoint of heat resistance, and alicyclic diamines are preferable from the viewpoint of transparency. When aromatic diamines having a benzoxazole structure are used, a high elastic modulus, low heat shrinkability, and a low coefficient of linear thermal expansion as well as high heat resistance can be exerted. The diamines and isocyanates may be used singly or in combination of two or more kinds thereof.

Examples of the aromatic diamines include: 2,2'-dimethyl-4,4'-diaminobiphenyl; 1,4-bis[2-(4-aminophenyl)-2-propyl]benzene; 1,4-bis(4-amino-2-trifluoromethylphenoxy)benzene; 2,2'-ditrifluoromethyl-4,4'-diaminobiphenyl; 4,4'-bis(4-aminophenoxy)biphenyl; 4,4'-bis(3-aminophenoxy)biphenyl; bis[4-(3-aminophenoxy)phenyl]ketone; bis[4-(3-aminophenoxy)phenyl]sulfide; bis[4-(3-aminophenoxy)phenyl] sulfone; 2,2-bis[4-(3-aminophenoxy)phenyl]propane; 2,2-bis[4-(3-aminophenoxy)phenyl]-1,1,1,3,3,3-hexafluoropropane; m-phenylenediamine; o-phenylenediamine; p-phenylenediamine; m-aminobenzylamine; p-aminobenzylamine; 4-amino-N-(4-aminophenyl)benzamide; 3,3'-diaminodiphenylether; 3,4'-diaminodiphenylether; 4,4'-diaminodiphenylether; 2,2'-trifluoromethyl-4,4'-diaminodiphenylether; 3,3'-diaminodiphenylsulfide; 3,4'-diaminodiphenylsulfide; 4,4'-diaminodiphenylsulfide; 3,3'-diaminodiphenylsulfoxide; 3,4'-diaminodiphenylsulfoxide; 4,4'-diaminodiphenylsulfoxide; 3,3'-diaminodiphenyl sulfone; 3,4'-diaminodiphenyl sulfone; 4,4'-diaminodiphenyl sulfone; 3,3'-diaminobenzophenone; 3,4'-diaminobenzophenone; 4,4'-diaminobenzophenone; 3,3'-diaminodiphenylmethane; 3,4'-diaminodiphenylmethane; 4,4'-diaminodiphenylmethane; bis[4-(4-aminophenoxy)phenyl]methane; 1,1-bis[4-(4-aminophenoxy)phenyl]ethane; 1,2-bis[4-(4-aminophenoxy)phenyl]ethane; 1,1-bis[4-(4-aminophenoxy)phenyl]propane; 1,2-bis[4-(4-aminophenoxy)phenyl]propane; 1,3-bis[4-(4-aminophenoxy)phenyl]propane; 2,2-bis[4-(4-aminophenoxy)phenyl]propane; 1,1-bis[4-(4-aminophenoxy)phenyl]butane; 1,3-bis[4-(4-aminophenoxy)phenyl]butane; 1,4-bis[4-(4-aminophenoxy)phenyl]butane; 2,2-bis[4-(4-aminophenoxy)phenyl]butane; 2,3-bis[4-(4-aminophenoxy)phenyl]butane; 2-[4-(4-aminophenoxy)phenyl]-2-[4-(4-aminophenoxy)-3-methylphenyl]propane; 2,2-bis[4-(4-aminophenoxy)-3-methylphenyl]propane; 2-[4-(4-aminophenoxy)phenyl]-2-[4-(4-aminophenoxy)-3,5-dimethylphenyl]propane; 2,2-bis[4-(4-aminophenoxy)-3,5-dimethylphenyl]propane; 2,2-bis[4-(4-aminophenoxy)phenyl]-1,1,1,3,3,3-hexafluoropropane; 1,4-bis(3-aminophenoxy)benzene; 1,3-bis(3-aminophenoxy)benzene; 1,4-bis(4-aminophenoxy)benzene; 4,4'-bis(4-aminophenoxy)biphenyl; bis[4-(4-aminophenoxy)phenyl]ketone; bis[4-(4-aminophenoxy)phenyl]sulfide; bis[4-(4-aminophenoxy)phenyl]sulfoxide; bis[4-(4-aminophenoxy)phenyl] sulfone; bis[4-(3-aminophenoxy)phenyl]ether; bis[4-(4-aminophenoxy)phenyl]ether; 1,3-bis[4-(4-aminophenoxy)benzoyl]benzene; 1,3-bis[4-(3-aminophenoxy)benzoyl]benzene; 1,4-bis[4-(3-aminophenoxy)benzoyl]benzene; 4,4'-bis[(3-aminophenoxy)benzoyl]benzene; 1,1-bis[4-(3-aminophenoxy)phenyl]propane; 1,3-bis[4-(3-aminophenoxy)phenyl]propane; 3,4'-diaminodiphenylsulfide; 2,2-bis[3-(3-aminophenoxy)phenyl]-1,1,1,3,3,3-hexafluoropropane; bis[4-(3-aminophenoxy)phenyl]methane; 1,1-bis[4-(3-aminophenoxy)phenyl]ethane; 1,2-bis[4-(3-aminophenoxy)phenyl]ethane; bis[4-(3-aminophenoxy)phenyl]sulfoxide; 4,4'-bis[3-(4-aminophenoxy)benzoyl]diphenylether; 4,4'-bis[3-(3-aminophenoxy)benzoyl]diphenylether; 4,4'-bis[4-(4-amino-α,α-dimethylbenzyl)phenoxy]benzophenone; 4,4'-bis[4-(4-amino-α,α-dimethylbenzyl)phenoxy]diphenyl sulfone; bis[4-{4-(4-aminophenoxy)phenoxy}phenyl] sulfone; 1,4-bis[4-(4-aminophenoxy)phenoxy-α,α-dimethylbenzyl]benzene; 1,3-bis[4-(4-aminophenoxy)phenoxy-α,α-dimethylbenzyl]benzene; 1,3-bis[4-(4-amino-6-trifluoromethylphenoxy)-α,α-dimethylbenzyl]benzene; 1,3-bis[4-(4-amino-6-fluorophenoxy)-α,α-dimethylbenzyl]benzene; 1,3-bis[4-(4-amino-6-methylphenoxy)-α,α-dimethylbenzyl]benzene; 1,3-bis[4-(4-amino-6-cyanophenoxy)-α,α-dimethylbenzyl]benzene; 3,3'-diamino-4,4'-diphenoxybenzophenone; 4,4'-diamino-5,5'-diphenoxybenzophenone; 3,4'-diamino-4,5'-diphenoxybenzophenone; 3,3'-diamino-4-phenoxybenzophenone; 4,4'-diamino-5-phenoxybenzophenone, 3,4'-diamino-4-phenoxybenzophenone; 3,4'-diamino-5'-phenoxybenzophenone; 3,3'-diamino-4,4'-dibiphenoxybenzophenone; 4,4'-diamino-5,5'-dibiphenoxybenzophenone; 3,4'-diamino-4,5'-dibiphenoxybenzophenone; 3,3'-diamino-4-biphenoxybenzophenone; 4,4'-diamino-5-biphenoxybenzophenone; 3,4'-diamino-4-biphenoxybenzophenone; 3,4'-diamino-5'-biphenoxybenzophenone; 1,3-bis(3-amino-4-phenoxybenzoyl)benzene; 1,4-bis(3-amino-4-phenoxybenzoyl)benzene; 1,3-bis(4-amino-5-phenoxybenzoyl)benzene; 1,4-bis(4-amino-5-phenoxybenzoyl)benzene; 1,3-bis(3-amino-4-biphenoxybenzoyl)benzene, 1,4-bis(3-amino-4-biphenoxybenzoyl)benzene; 1,3-bis(4-amino-5-biphenoxybenzoyl)benzene; 1,4-bis(4-amino-5-biphenoxybenzoyl)benzene; 2,6-bis[4-(4-amino-α,α-dimethylbenzyl)phenoxy]benzonitrile; 4,4'-[9H-fluorene-9,9-diyl]bisaniline (also known as "9,9-bis(4-aminophenyl)fluorene"); spiro(xanthene-9,9'-fluorene)-2,6-diyl bis(oxycarbonyl)]bisaniline; 4,4'-[spiro(xanthene-9,9'-fluorene)-2,6-diyl bis(oxycarbonyl)]bisaniline; and 4,4'-[spiro(xanthene-9,9'-fluorene)-3,6-diyl bis(oxycarbonyl)]bisaniline. A part or all of hydrogen atoms on an aromatic ring of the above-described aromatic diamines may be substituted with halogen atoms; alkyl groups or alkoxyl groups having 1 to 3 carbon atoms; or cyano groups, and further a part or all of hydrogen atoms of the alkyl groups or alkoxyl groups having 1 to 3 carbon atoms may be substituted with halogen atoms. The aromatic diamines having a benzoxazole structure are not particularly limited, and examples thereof include: 5-amino-2-(p-aminophenyl)benzoxazole; 6-amino-2-(p-aminophenyl)benzoxazole; 5-amino-2-(m-aminophenyl)benzoxazole; 6-amino-2-(m-aminophenyl)benzoxazole; 2,2'-p-phenylenebis(5-aminobenzoxazole); 2,2'-p-phenylenebis(6-aminobenzoxazole); 1-(5-aminobenzoxazolo)-4-(6-aminobenzoxazolo)benzene; 2,6-(4,4'-diaminodiphenyl)benzo[1,2-d:5,4-d']bisoxazole; 2,6-(4,4'-diaminodiphenyl)benzo[1,2-d:4,5-d']bisoxazole; 2,6-(3,4'-diaminodiphenyl)benzo[1,2-d:5,4-d']bisoxazole; 2,6-(3,4'-diaminodiphenyl)benzo[1,2-d:4,5-d']bisoxazole; 2,6-(3,3'-diaminodiphenyl)benzo[1,2-d:5,4-d']bisoxazole; and 2,6-(3,3'-diaminodiphenyl)benzo[1,2-d:4,5-d']bisoxazole. Among these, particularly 2,2'-ditrifluoromethyl-4,4'-diaminobiphenyl, 4-amino-N-(4-aminophenyl)benzamide, 4,4'-diaminodiphenyl sulfone, and 3,3'-diaminobenzophenone are preferable. The aromatic diamines may be used singly or a plurality of these may be used in combination.

Examples of the alicyclic diamines include 1,4-diaminocyclohexane, 1,4-diamino-2-methylcyclohexane, 1,4-diamino-2-ethylcyclohexane, 1,4-diamino-2-n-propylcyclohexane, 1,4-diamino-2-isopropylcyclohexane, 1,4-diamino-2-n-butylcyclohexane, 1,4-diamino-2-isobutylcyclohexane, 1,4-diamino-2-sec-butylcyclohexane, 1,4-diamino-2-tert-butylcyclohexane, and 4,4'-methylenebis(2,6-dimethylcyclohexylamine). Among these, particularly 1,4-diaminocyclohexane and 1,4-diamino-2-methylcyclohexane are preferable, and 1,4-diaminocyclohexane is more preferable. The alicyclic diamines may be used singly or a plurality of these may be used in combination.

Examples of the diisocyanates include aromatic diisocyanates such as diphenylmethane-2,4'-diisocyanate, 3,2'- or 3,3'- or 4,2'- or 4,3'- or 5,2'- or 5,3'- or 6,2'- or 6,3'-dimethyldiphenylmethane-2,4'-diisocyanate, 3,2'- or 3,3'- or 4,2'- or 4,3'- or 5,2'- or 5,3'- or 6,2'- or 6,3'-diethyldiphenylmethane-2,4'-diisocyanate, 3,2'- or 3,3'- or 4,2'- or 4,3'- or 5,2'- or 5,3'- or 6,2'- or 6,3'-dimethoxydiphenylmethane-2,4'-diisocyanate, diphenylmethane-4,4'-diisocyanate, diphenylmethane-3,3'-diisocyanate, diphenylmethane-3,4'-diisocyanate, diphenyl ether-4,4'-diisocyanate, benzophenone-4,4'-diisocyanate, diphenylsulfone-4,4'-diisocyanate, tolylene-2,4-diisocyanate, tolylene-2,6-diisocyanate, m-xylylene diisocyanate, p-xylylene diisocyanate, naphthalene-2,6-diisocyanate, 4,4'-(2,2 bis(4-phenoxyphenyl)propane)diisocyanate, 3,3'- or 2,2'-dimethylbiphenyl-4,4'-diisocyanate, 3,3'- or 2,2'-diethylbiphenyl-4,4'-diisocyanate, 3,3'-dimethoxybiphenyl-4,4'-diisocyanate, and 3,3'-diethoxybiphenyl-4,4'-diisocyanate, and hydrogenated diisocyanates of any of these (for example, isophorone diisocyanate, 1,4-cyclohexane diisocyanate, 1,3-cyclohexane diisocyanate, 4,4'-dicyclohexylmethane diisocyanate, and hexamethylene diisocyanate). Among these, diphenylmethane-4,4'-diisocyanate, tolylene-2,4-diisocyanate, tolylene-2,6-diisocyanate, 3,3'-dimethylbiphenyl-4,4'-diisocyanate, naphthalene-2,6-diisocyanate, 4,4'-dicyclohexylmethane diisocyanate, and 1,4-cyclohexane diisocyanate are preferable from the viewpoint of low moisture absorption property, dimensional stability, price, and polymerizability. The diisocyanates may be used singly or a plurality of these may be used in combination.

In the present embodiment, the polymer film is preferably a polyimide film. When the polymer film is a polyimide film, the polymer film exhibits excellent heat resistance. When the polymer film is a polyimide film, the polymer film can be suitably cut with an ultraviolet laser.

The thickness of the polymer film is preferably 3 µm or more, more preferably 7 µm or more, still more preferably 14 µm or more, yet still more preferably 20 µm or more. The upper limit of the thickness of the polymer film is not particularly limited but is preferably 250 µm or less, more preferably 100 µm or less, still more preferably 50 µm or less for use as a flexible electronic device.

The average coefficient of linear thermal expansion (CTE) of the polymer film at between 30°C and 250°C is preferably 30 ppm/K or less. The CTE is more preferably 28 ppm/K or less, still more preferably 25 ppm/K or less, yet still more preferably 20 ppm/K or less. The CTE is preferably -5 ppm/K or more, more preferably -3 ppm/K or more, still more preferably 1 ppm/K or more. When the CTE is in the above range, a small difference in coefficient of linear thermal expansion between the polymer film and a general support (inorganic substrate) can be maintained, and the polymer film and the inorganic substrate can be prevented from peeling off from each other or warping together with the support when being subjected to a process of applying heat as well. Here, CTE is a factor that indicates reversible expansion and contraction with respect to temperature. The CTE of the polymer film refers to the average value of the CTE in the application direction (MD direction) of the polymer solution or polymer precursor solution and the CTE in the transverse direction (TD direction). The method for measuring CTE of the polymer film is as described in Examples.

The difference in CTE between the polymer film and the inorganic substrate is preferably 27 ppm/K or less, more preferably 25 ppm/K or less, still more preferably 17 ppm/K or less. By setting the difference in CTE between the polymer film and the inorganic substrate to 27 ppm/K or less, warpage of the laminate due to expansion of the polymer film during heating can be suppressed.

In a case where the polymer film is a transparent polyimide film, the yellowness index (hereinafter, also referred to as "yellow index" or "YI") of the transparent polyimide film is preferably 13 or less, more preferably 12 or less, still more preferably 11 or less. The lower limit of the yellowness index of the transparent polyimide is not particularly limited, but is preferably 0.1 or more, more preferably 0.2 or more, still more preferably 0.3 or more for use as a flexible electronic device.

When the polymer film is a transparent polyimide film, the haze of the transparent polyimide film is preferably 1.0 or less, more preferably 0.8 or less, still more preferably 0.5 or less, yet still more preferably 0.3 or less. The lower limit of haze is not particularly limited, but industrially, there is no problem when the haze is 0.01 or more and the haze may be 0.05 or more.

The heat shrinkage rate of the polymer film at between 30°C and 500°C is preferably ±0.9% or less, more preferably ±0.6%, still more preferably ±0.2% or less. The heat shrinkage rate is a factor that represents irreversible expansion and contraction with respect to the temperature. The method for measuring heat shrinkage rate of the polymer film is as described in Examples.

The tensile breaking strength of the polymer film is preferably 60 MPa or more, more preferably 80 MP or more, still more preferably 100 MPa or more. The upper limit of the tensile breaking strength is not particularly limited but is practically less than about 1000 MPa. When the tensile breaking strength is 60 MPa or more, it is possible to prevent the polymer film from breaking when being peeled off from the inorganic substrate. The tensile breaking strength of the polymer film refers to the average value of the tensile breaking strength in the machine direction (MD direction) and the tensile breaking strength in the transverse direction (TD direction) of the polymer film.

The tensile breaking elongation of the polymer film is preferably 1% or more, more preferably 5% or more, still more preferably 10% or more. When the tensile breaking elongation is 1% or more, the handleability is excellent. The tensile breaking elongation of the polymer film refers to the average value of the tensile breaking elongation in the machine direction (MD direction) and the tensile breaking elongation in the transverse direction (TD direction) of the polymer film.

It is required that the tensile modulus of the polymer film is 4 GPa or more. The tensile modulus is preferably 4.5 GPa or more, more preferably 5 GPa or more. When the tensile modulus is 4 GPa or more, the polymer film undergoes little elongation deformation when peeled off from the inorganic substrate, and the handleability is excellent. It is required that the tensile modulus is 9 GPa or less. The tensile modulus is preferably 8.5 GPa or less, more preferably 8 GPa or less. When the tensile modulus is 9 GPa or less, the polymer film can be used as a flexible film. The tensile modulus of the polymer film is measured by the method described in Examples.

The storage modulus of the polymer film at 280°C is preferably 9 GPa or less. The storage modulus is more preferably 8 GPa or less, still more preferably 7 GPa or less. When the storage modulus at 280°C is 9 GPa or less, the force of the polymer film to deform the inorganic substrate is small, and this decreases warpage of the laminate caused by the polymer film undergone dimensional changes due to heat shrinkage and CTE at high temperatures. The storage modulus of the polymer film at 280°C is preferably 2.5 GPa or more, more preferably 3 GPa or more, still more preferably 4 GPa or more. The tensile modulus and storage modulus of the polymer film refer to the average values of the tensile modulus in the machine direction (MD direction) and tensile modulus in the transverse direction (TD direction) of the polymer film. The tensile modulus and storage modulus of the polymer film are measured by the methods described in Examples.

The thickness unevenness of the polymer film is preferably 20% or less, more preferably 12% or less, still more preferably 7% or less, particularly preferably 4% or less. When the thickness unevenness exceeds 20%, it tends to be difficult to apply the film to narrow portions. The film thickness unevenness can be determined by, for example, randomly extracting about 10 positions from the film to be measured, measuring the film thickness using a contact-type film thickness meter, and calculating based on the following equation. Film thickness unevenness (%) = 100 × (maximum film thickness - minimum film thickness) ÷ average film thickness

The polymer film is preferably one obtained in the form of being wound as a long polymer film having a width of 300 mm or more and a length of 10 m or more at the time of manufacture, more preferably one in the form of a roll-shaped polymer film wound around a winding core. When the polymer film is wound in a roll shape, it is easy to transport the polymer film in the form of a polymer film wound in a roll shape.

The polymer film preferably contains a lubricant. The lubricant is not particularly limited, but is preferably inorganic particles, more preferably silica. By containing a lubricant, fine irregularities may be imparted to the surface of the polymer film to secure slipperiness, and the handling properties and productivity may become favorable. The particle size of the lubricant is preferably 1 nm or more, more preferably 5 nm or more, still more preferably 10 nm or more, and is preferably 1000 nm or less, more preferably 100 nm or less, still more preferably 50 nm or less. The content of the lubricant in the polymer film (or with respect to the total amount of polymer solids in the polyamic acid solution) is preferably 0.01% by mass or more. The content of the lubricant is more preferably 0.05% by mass or more, still more preferably 0.1% by mass or more. The content of the lubricant is preferably less than 1% by mass, more preferably 0.8% by mass or less, still more preferably 0.5% by mass or less. By containing the lubricant in the above range, the close contact property to the inorganic substrate may increase, and the shear peel strength with the inorganic substrate may thus be improved.

### <Inorganic substrate>

The inorganic substrate may be a plate-type substrate which can be used as a substrate made of an inorganic substance, and examples thereof include those mainly composed of glass plates, ceramic plates, semiconductor wafers, metals and the like and those in which these glass plates, ceramic plates, semiconductor wafers, and metals are laminated, those in which these are dispersed, and those in which fibers of these are contained as the composite of these.

Examples of the glass plates include quartz glass, high silicate glass (96% silica), soda lime glass, lead glass, aluminoborosilicate glass, and borosilicate glass (Pyrex (registered trademark)), borosilicate glass (alkali-free), borosilicate glass (microsheet), aluminosilicate glass and the like. Among these, those having a coefficient of linear thermal expansion of 5 ppm/K or less are desirable, and in the case of a commercially available product, "Corning (registered trademark) 7059", "Corning (registered trademark) 1737", and "EAGLE" manufactured by Corning Inc., "AN100" manufactured by AGC Inc., "OA10" and "OA11G" manufactured by Nippon Electric Glass Co., Ltd., "AF32" manufactured by SCHOTT AG, and the like that are glass for liquid crystal are desirable.

The semiconductor wafer is not particularly limited, but examples thereof include a silicon wafer and wafers of germanium, silicon-germanium, gallium-arsenide, aluminum-gallium-indium, nitrogen-phosphorus-arsenic-antimony, SiC, InP (indium phosphide), InGaAs, GaInNAs, LT, LN, ZnO (zinc oxide), CdTe (cadmium telluride), ZnSe (zinc selenide) and the like. Among these, the wafer preferably used is a silicon wafer, and a mirror-polished silicon wafer having a size of 8 inches or more is particularly preferable.

The metals include single element metals such as W, Mo, Pt, Fe, Ni, and Au, alloys such as Inconel, Monel, Nimonic, carbon-copper, Fe-Ni-based Invar alloy, and Super Invar alloy, and the like. Multilayer metal plates formed by adding another metal layer or a ceramic layer to these metals are also included. In this case, when the overall coefficient of linear thermal expansion (CTE) with the additional layer is low, Cu, Al and the like are also used in the main metal layer. The metals used as the addition metal layer is not limited as long as they are those that strengthen the close contact property with the transparent heat-resistant polymer film, those that have properties that there is no diffusion and the chemical resistance and heat resistance are favorable, but suitable examples thereof include Cr, Ni, TiN, and Mo-containing Cu.

Examples of the ceramic plate in the present invention include ceramics for substrate such as Al₂O₃, mullite, ALN, SiC, crystallized glass, cordierite, spodumene, Pb-BSG+CaZrO₃+Al₂O₃, crystallized glass+Al₂O₃, crystallized Ca-BSG, BSG+quartz, BSG+Al₂O₃, Pb-BSG+Al₂O₃, glass-ceramic, and zerodur material.

It is desirable that the planar portion of the inorganic substrate is sufficiently flat. Specifically, the P-V value of the surface roughness is preferably 50 nm or less, more preferably 20 nm or less, still more preferably 5 nm or less. As the P-V value of the surface roughness of the inorganic substrate is in the above range, the close contact property to the polymer film may increase, and the shear peel strength with the polymer film may thus be improved. The lower limit is not particularly limited, but industrially, may be 0.1 nm or more, or 1 nm or more.

The thickness of the inorganic substrate is not particularly limited, but a thickness of 10 mm or less is preferable, a thickness of 3 mm or less is more preferable, and a thickness of 1.3 mm or less is still more preferable from the viewpoint of handleability. The lower limit of the thickness is not particularly limited but is preferably 0.07 mm or more, more preferably 0.15 mm or more, and further preferably 0.3 mm or more. When the inorganic substrate is too thin, the inorganic substrate is easily destroyed and it is difficult to handle the inorganic substrate. When the inorganic substrate is too thick, the inorganic substrate is heavy and it is difficult to handle the inorganic substrate.

The tensile modulus of the inorganic substrate is preferably 50 GPa or more, more preferably 60 GPa or more, still more preferably 65 GPa or more. The upper limit of the tensile modulus is 80 GPa, more preferably 78 GPa or less. When the tensile modulus of the inorganic substrate is within the above range, the handleability is excellent.

### <Laminate>

The laminate of the present invention is obtained by laminating the heat-resistant polymer film and the inorganic substrate substantially without using an adhesive. In a case where the heat-resistant polymer film has a laminated configuration of two or more layers, it is preferable that the heat-resistant polymer film includes a heat-resistant polymer film layer that is in contact with an inorganic substrate and a heat-resistant polymer film layer that is not in contact with the inorganic substrate but is adjacent to the transparent heat-resistant polymer film layer.

It is required that the shear peel strength between the heat-resistant polymer film and the inorganic substrate is 0.8 MPa or more. The shear peel strength is preferably 0.9 MPa or more, more preferably 1 MPa or more since peeling off of the inorganic substrate and the heat-resistant polymer film from each other can be easily suppressed during mechanical handling. The upper limit of the shear peel strength is not particularly limited, but 10 MPa or less is sufficient, and the upper limit may be 5 MPa or less. It is preferable to select the heat-resistant polymer film and the inorganic substrate so that the shear peel strength is in the above range.

The shape of the laminate is not particularly limited and may be square or rectangular. The shape of the laminate is preferably rectangular, and the length of the long side is preferably 300 mm or more, more preferably 500 mm or more, still more preferably 1000 mm or more. The upper limit is not particularly limited, but industrially, a length of 20000 mm or less is sufficient and the length may be 10000 mm or less.

In the present invention, the size of the laminate is preferably such that the diameter of the circumscribed circle has a size of 500 mm or more when the inorganic substrate is rectangular. By using an inorganic substrate of this size, it is possible to sufficiently acquire the effect of improving handleability of the laminate, which is the effect of the present invention. The diameter is more preferably 520 mm or more, still more preferably 550 mm or more. The upper limit is not particularly limited, but industrially, a diameter of 1000 mm or less is sufficient, and the diameter may be 800 mm or less.

In the present invention, it is preferable that warpage of the laminate of a heat-resistant polymer film and an inorganic substrate is 300 µm or less when the laminate is heated at 280°C for 1 hour. When the warpage of the laminate is 300 µm or less during heating at 280°C for 1 hour, that is, after a high temperature process, cracking of the coating and functional layer applied to the laminate surface and displacement within the apparatus can be avoided.

### <Adhesive>

An adhesive layer is substantially not interposed between the inorganic substrate and heat-resistant polymer film of the present invention. Here, the adhesive layer in the present invention refers to a layer containing a Si (silicon) component at less than 10% as a mass ratio (less than 10% by mass). Substantially not used (not interposed) means that the thickness of the adhesive layer interposed between the inorganic substrate and the transparent heat-resistant polymer film is preferably 0.4 µm or less, more preferably 0.3 µm or less, still more preferably 0.2 µm or less, particularly preferably 0.1 µm or less, most preferably 0 µm.

### <Silane coupling agent (SCA)>

In the laminate, in a case where a heat-resistant polymer film that has been molded into a film shape in advance is bonded to an inorganic substrate, it is preferable to have a layer of a silane coupling agent between the heat-resistant polymer film and the inorganic substrate. In the present invention, the silane coupling agent refers to a compound containing a Si (silicon) component at 10% by mass or more. By using the silane coupling agent layer, the intermediate layer between the heat-resistant polymer film and the inorganic substrate can be thinned, and thus there are effects that the amounts of degassed components during heating are small, elution hardly occurs in a wet process as well, and only trace amounts of components are eluted even if elution occurs. The silane coupling agent preferably contains a large amount of silicon oxide component since the heat resistance is improved, and is particularly preferably one exhibiting heat resistance at a temperature of about 400°C. The thickness of the silane coupling agent layer is preferably less than 0.2 µm. As a range for use as a flexible electronic device, the thickness of the silane coupling agent layer is preferably 100 nm or less (0.1 µm or less), more desirably 50 nm or less, still more desirably 10 nm. When a silane coupling agent layer is normally fabricated, the thickness thereof is about 0.10 µm or less. In processes where it is desired to use as little silane coupling agent as possible, a silane coupling agent layer having a thickness of 5 nm or less can also be used. There is the possibility that the peel strength decreases or some parts are not be attached when the thickness is 1 nm or less, and it is thus desirable that the thickness of the silane coupling agent layer is 1 nm or more.

The silane coupling agent in the present invention is not particularly limited, but one having an amino group or an epoxy group is preferable. Specific examples of the silane coupling agent include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl N-(1,3-dimethyl-butylidene)propylamine, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilanevinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatepropyltriethoxysilane, tris-(3-trimethoxysilylpropyl)isocyanurate, chloromethylphenetyltrimethoxysilane, and chloromethyltrimethoxysilane. Among these, preferred examples include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethyl-butylidene)propylamine, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, aminophenyltrimethoxysilane, aminophenetyltrimethoxysilane, and aminophenylaminomethylphenetyltrimethoxysilane. When heat resistance is required in the process, a silane coupling agent, in which Si and an amino group or the like is linked to each other via an aromatic, is desirable.

In the present invention, the laminate may be fabricated by applying a polymer precursor or a polymer solution onto an inorganic substrate and performing heating. In the step of chemically reacting a polymer precursor to obtain a laminate having a resin layer containing a polymer on an inorganic substrate, conditions are applied depending on the kind of resin layer, and for example, the conditions are as follows in the case of a resin layer of a polyimide-based resin.

The heat treatment for the imidization reaction can be carried out at a constant temperature, but is preferably carried out while the temperature is increased continuously or stepwise from the viewpoint of avoiding rapid shrinkage of the resin layer and suppressing deterioration of surface smoothness due to breakage and rapid solvent volatilization.

In a case where the heat treatment is carried out while the temperature is increased, the minimum temperature is preferably 150°C to 190°C and the maximum temperature is preferably 280°C to 450°C. The minimum temperature is more preferably 180°C to 190°C, and the maximum temperature is more preferably 290°C to 450°C. In a case where the heat treatment is carried out at a constant temperature, the temperature is preferably 200°C to 370°C, more preferably 210°C to 350°C. It is also possible to continuously increase the temperature from the drying temperature of the applied solution.

The total time for the heat treatment after drying is preferably 5 to 100 minutes, more preferably 10 to 50 minutes.

It is preferable that the adhesive strength between the heat-resistant polymer film and the inorganic substrate is 0.3 N/cm or less. This makes it remarkably easy to peel off the heat-resistant polymer film from the inorganic substrate after a device is formed on the heat-resistant polymer film. Hence, it is possible to manufacture a device connected body that can be produced in a large quantity and it is easy to manufacture a flexible electronic device. The adhesive strength is preferably 0.25 N/cm or less, more preferably 0.2 N/cm or less, still more preferably 0.15 N/cm or less, particularly preferably 0.1 N/cm or less. The adhesive strength is preferably 0.01 N/cm or more. The adhesive strength is more preferably 0.02 N/cm or more, still more preferably 0.03 N/cm or more, particularly preferably 0.05 N/cm or more since the laminate does not peel off when a device is formed on the heat-resistant polymer film. The adhesive strength is a value of the laminate after the heat-resistant polymer film and the inorganic substrate are bonded together and then subjected to heat treatment at 100°C for 10 minutes in an air atmosphere (initial adhesive strength). It is preferable that the adhesive strength of a laminate obtained by further subjecting the laminate at the time of initial adhesive strength measurement to heat treatment at 200°C for 1 hour in a nitrogen atmosphere is also within the above range (adhesive strength after heat treatment at 200°C).

The laminate of the present invention can be fabricated, for example, according to the following procedure. A laminate can be obtained by treating at least one surface of the inorganic substrate with a silane coupling agent in advance, superimposing the surface treated with a silane coupling agent on the heat-resistant polymer film, and pressurizing the two for lamination. A laminate can also be obtained by treating at least one surface of the heat-resistant polymer film with a silane coupling agent in advance, superimposing the surface treated with a silane coupling agent on the inorganic substrate, and pressurizing the two for lamination. Examples of the pressurization method include ordinary pressing or lamination in the air or pressing or lamination in a vacuum, but lamination in the air is desirable for large-sized laminates (for example, more than 200 mm) in order to acquire stable adhesive strength over the entire surface. In contrast, pressing in a vacuum is preferable in the case of a laminate having a small size of about 200 mm or less. As the degree of vacuum, a degree of vacuum obtained by an ordinary oil-sealed rotary pump is sufficient, and about 10 Torr or less is sufficient. The pressure is preferably 1 MPa to 20 MPa, still more preferably 3 MPa to 10 MPa. The substrate may be destroyed when the pressure is high, and close contact may not be achieved at some portions when the pressure is low. The temperature is preferably 90°C to 300°C, still more preferably 100°C to 250°C. The film may be damaged when the temperature is high, and the close contact force may be weak when the temperature is low.

### fabrication of flexible electronic device>

When the laminate is used, a flexible electronic device can be easily fabricated by using existing equipment and processes for electronic device manufacture. Specifically, a flexible electronic device can be fabricated by forming an electronic element or wiring (electronic device) on the heat-resistant polymer film of the laminate and peeling off the electronic element or wiring (electronic device) together with the heat-resistant polymer film from the laminate.

In the present specification, the electronic device refers to a wiring board which carries out electrical wiring and has a single-sided, double-sided, or multilayered structure, electronic circuits including active devices such as transistors and diodes and passive devices such as resistors, capacitors, and inductors, sensor elements which sense pressure, temperature, light, humidity and the like, biosensor elements, light emitting elements, image display elements such as liquid crystal displays, electrophoresis displays, and self-luminous displays, wireless and wired communication elements, arithmetic elements, storage elements, MEMS elements, solar cells, thin film transistors, and the like.

In the method for manufacturing a flexible electronic device in the present invention, the device is formed on the heat-resistant polymer film of the laminate fabricated by the above-described method and then the heat-resistant polymer film is peeled off from the inorganic substrate.

### EXAMPLES

Hereinafter, the present invention will be described in detail with reference to Examples, but the present invention is not limited to the following Examples as long as the gist of the present invention is not exceeded.

### <Preparation of heat-resistant polymer film>

The film F4 used in Examples was a commercially available film.
F4: XENOMAX (registered trademark) F38LR2 (polyimide film manufactured by TOYOBO CO., LTD., thickness: 38 µm)

### <Preparation of polyamic acid solution A1>

The inside of a reaction vessel equipped with a nitrogen introducing tube, a reflux tube, and a stirring bar was purged with nitrogen, and then 22.73 parts by mass of 4,4'-diaminobenzanilide (DABAN), 201.1 parts by mass of N,N-dimethylacetamide (DMAc), and a dispersion obtained by dispersing colloidal silica (lubricant) in dimethylacetamide ("SNOWTEX (registered trademark) DMAC-ST-ZL" manufactured by Nissan Chemical Corporation) were added so that colloidal silica (lubricant) was 0.1% by mass of the total amount of polymer solids in the polyamic acid solution, and completely dissolved. Subsequently, 22.73 parts by mass of 3,3',4,4'-biphenyltetracarboxylic dianhydride (BPDA) was added dividedly in the solid form, and the mixture was then stirred at room temperature for 24 hours. Thereafter, 173.1 parts by mass of DMAc was added for dilution, thereby obtaining a polyamic acid solution A1 having a solid content (NV) of 12% by mass and a reduced viscosity (ηsp/C) of 3.10 dl/g.

### <Preparation of polyamic acid solution A2>

While nitrogen was allowed to pass through a reaction vessel equipped with a nitrogen introducing tube and a stirring bar, pyromellitic dianhydride (PMDA, 6.54 parts by mass) and 4,4'-diamino-2,2'-bis(trifluoromethyl)biphenyl (TFMB, 9.61 parts by mass) were introduced, N,N-dimethylacetamide (DMAc, 164.0 parts by mass) and a dispersion obtained by dispersing colloidal silica (lubricant) in dimethylacetamide ("SNOWTEX (registered trademark) DMAC-ST-ZL" manufactured by Nissan Chemical Corporation) were added so that colloidal silica (lubricant) was 0.1% by mass of the total amount of polymer solids in the polyamic acid solution, and then the mixture was stirred at 25°C for 24 hours to obtain a polyamic acid solution A2.

<Preparation of polyamic acid solution A3>

The inside of a reaction vessel equipped with a nitrogen introducing tube, a thermometer, and a stirring bar was purged with nitrogen, then 223 parts by mass of 5-amino-2-(p-aminophenyl)benzoxazole (DAMBO) and 4416 parts by mass of N,N-dimethylacetamide were added and completely dissolved, subsequently 217 parts by mass of pyromellitic dianhydride (PMDA) and a dispersion obtained by dispersing colloidal silica as a lubricant in dimethylacetamide ("SNOWTEX (registered trademark) DMAC-ST30" manufactured by Nissan Chemical Corporation) were added so that silica (lubricant) was 0.1% by mass of the total amount of polymer solids in the polyamic acid solution, and the mixture was stirred at a reaction temperature of 25°C for 24 hours to obtain a brown and viscous polyamic acid solution A3.

### <Preparation of polyamic acid solution A4>

The inside of a reaction vessel equipped with a nitrogen introducing tube, a thermometer, and a stirring bar was purged with nitrogen, then 10.32 parts by mass of 1,3-bis(4-aminophenoxy)benzene (TPE-R) and 75.71 parts by mass were added and completely dissolved, subsequently, 10.86 parts by mass of 4,4'-oxydiphthalic anhydride (ODPA) and a dispersion obtained by dispersing colloidal silica as a lubricant in dimethylacetamide ("SNOWTEX (registered trademark) DMAC-ST30" manufactured by Nissan Chemical Corporation) were added so that silica (lubricant) was 0.1% by mass of the total amount of polymer solids in the polyamic acid solution, and the mixture was stirred at a reaction temperature of 25°C for 24 hours to obtain a brown and viscous polyamic acid solution A4.

### <Preparation of polyamic acid solution A5>

A polyamic acid solution A5 was obtained by stirring the polyamic acid solution A3 and the polyamic acid solution A4 at a volume ratio of 90 : 10 at 25°C for 24 hours.

### <Preparation of polyamic acid solution A6>

A polyimide acid solution A6 was obtained in the same manner as the polyamic acid solution A5 except that the volume ratio was changed to 75 : 25.

### <Preparation of polyamic acid solution A7>

The inside of a reaction vessel equipped with a nitrogen introducing tube, a reflux tube, and a stirring bar was purged with nitrogen, and then 33.36 parts by mass of 2,2'-bis(trifluoromethyl)benzidine (TFMB), 270.37 parts by mass of N-methyl-2-pyrrolidone (NMP), and a dispersion obtained by dispersing colloidal silica in dimethylacetamide ("SNOWTEX (registered trademark) DMAC-ST" manufactured by Nissan Chemical Corporation) were added so that silica was 1% by mass of the total amount of polymer solids in the polyamic acid solution, and completely dissolved. Subsequently, 9.81 parts by mass of 1,2,3,4-cyclobutanetetracarboxylic dianhydride (CBDA), 11.34 parts by mass of 3,3',4,4'-biphenyltetracarboxylic acid (BPDA), 4.85 parts by mass of 4,4'-oxydiphthalic anhydride (ODPA) were added dividedly in the solid form, and the mixture was then stirred at room temperature for 24 hours. Thereafter, 165.7 parts by mass of DMAc was added for dilution, thereby obtaining a polyamic acid solution A7 having a solid content of 18% by mass and a reduced viscosity of 2.7 dl/g (molar ratio of TFMB//CBDA/BPDA/ODPA = 1.00//0.48/0.37/0.15).

### <Preparation of polyamic acid solution A8>

The inside of a reaction vessel equipped with a nitrogen introducing tube, a reflux tube, and a stirring bar was purged with nitrogen, then 22.73 parts by mass of 4,4'-diaminobenzanilide (DABAN), 201.1 parts by mass of N,N-dimethylacetamide (DMAc), and a dispersion obtained by dispersing colloidal silica as a lubricant in dimethylacetamide ("SNOWTEX (registered trademark) DMAC-ST-ZL" manufactured by Nissan Chemical Corporation) were added so that silica (lubricant) was 0.4% by mass of the total amount of polymer solids in the polyamic acid solution, and completely dissolved. Subsequently, 24.57 parts by mass of 1,2,3,4-cyclobutanetetracarboxylic dianhydride (CBDA) was added dividedly in the solid form, and the mixture was stirred at room temperature for 24 hours. Thereafter, 173.1 parts by mass of DMAc was added for dilution, thereby obtaining a polyamic acid solution A8 having a solid content (NV) of 13% by mass and a reduced viscosity of 3.1 dl/g.

### <Preparation of polyamic acid solution A9>

The inside of a reaction vessel equipped with a nitrogen introducing tube, a reflux tube, and a stirring bar was purged with nitrogen, and then 22.0 parts by mass of 2,2'-ditrifluoromethyl-4,4'-diaminobiphenyl (TFMB), 252.1 parts by mass of N,N-dimethylacetamide (DMAc), and a dispersion obtained by dispersing colloidal silica as a lubricant in dimethylacetamide ("SNOWTEX (registered trademark) DMAC-ST-ZL" manufactured by Nissan Chemical Corporation) were added so that silica (lubricant) was 0.2% by mass of the total amount of polymer solids in the polyamic acid solution, and completely dissolved. Subsequently, 22.0 parts by mass of 3,3',4,4'-biphenyltetracarboxylic dianhydride (BPDA) was added dividedly in the solid form, and the mixture was stirred at room temperature for 24 hours. Thereafter, 165.7 parts by mass of DMAc was added for dilution, thereby obtaining a polyamic acid solution A9 having a solid content (NV) of 11% by mass and a reduced viscosity of 3.5 dl/g.

### <Preparation of polyamic acid solution A10>

The inside of a reaction vessel equipped with a nitrogen introducing tube, a reflux tube, and a stirring bar was purged with nitrogen, then 302.0 parts by weight of N,N-dimethylacetamide (DMAc), 2.49 parts by weight of 1,3-bis(3-aminopropyl)tetramethyldisiloxane (AprTMOS), and 2.22 parts by mass of 4,4'-(hexafluoroisopropylidene)diphthalic anhydride (6FDA) were gradually dropped so that the temperature increase was 2°C or less, a dispersion obtained by dispersing colloidal silica as a lubricant in dimethylacetamide ("SNOWTEX (registered trademark) DMAC-ST-ZL" manufactured by Nissan Chemical Corporation) was further added so that silica (lubricant) was 3% by mass of the final total amount of polymer solids in the polyamic acid solution, and the mixture was stirred for 4 hours. Thereto, 28.8 parts by mass of 4,4'-diamino-2,2'-bis(trifluoromethyl)biphenyl (TFMB) was added, stirring was performed, and then 42.0 parts by mass of 4,4'-(hexafluoroisopropylidene)diphthalic anhydride (6FDA) was gradually introduced in several portions so that the temperature increase was 2°C or less, thereby obtaining a polyamic acid solution A10 having a solid content (NV) of about 20% by mass.

### <Preparation of polyimide solution B1>

While nitrogen gas was introduced into a reaction vessel equipped with a nitrogen introducing tube, a Dean-Stark tube and a reflux tube, a thermometer, and a stirring bar, 19.86 parts by mass of 4,4'-diaminodiphenyl sulfone (4,4'-DDS), 4.97 parts by mass of 3,3'-diaminodiphenyl sulfone (3,3'-DDS), and 80 parts by mass of gamma-butyrolactone (GBL) were added. Subsequently, 31.02 parts by mass of 4,4'-oxydiphthalic anhydride (ODPA), 24 parts by mass of GBL, and 13 parts by mass of toluene were added at room temperature, then the temperature was raised to an internal temperature of 160°C, and the mixture was heated under reflux at 160°C for 1 hour for imidization. After the imidization was completed, the temperature was raised to 180°C, and the reaction was continuously conducted while extracting toluene. After 12 hours of reaction, the oil bath was removed, the temperature was returned to room temperature, and a dispersion obtained by dispersing colloidal silica as a lubricant in DMAc ("SNOWTEX (registered trademark) DMAC-ST" manufactured by Nissan Chemical Corporation) and DMAc were added so that the solid content was 20% by mass and silica was 7% by mass of the total amount of polymer solids in the polyamic acid solution, thereby obtaining a polyimide solution B1 having a reduced viscosity of 0.70 dl/g (molar ratio of 4,4'-DDS/3,3'-DDS//ODPA = 0.80/0.20//1.00).

### <Fabrication of heat-resistant polymer film F1>

The polyamic acid solution A1 was adjusted and applied onto the lubricant-free surface of polyethylene terephthalate film A4100 (support manufactured by TOYOBO CO., LTD.) using a comma coater so that the final film **thickness was 25 µm.** The polyethylene terephthalate film A4100 was allowed to pass through a hot air furnace, wound up, and dried at 100°C for 10 minutes at this time. The polyamic acid film (green film) that gained self-supporting properties after drying was peeled off from the support, allowed to pass through a pin tenter with a pin sheet having pins disposed, and gripped by inserting the film edges into the pins, the pin sheet interval was adjusted so that the film did not break and unnecessary slackening did not occur, and the film was transported and heated at 200°C for 3 minutes, at 250°C for 3 minutes, at 400°C for 3 minutes, and at 450°C for 3 minutes to conduct the imidization reaction. Thereafter, the film was cooled to room temperature for 2 minutes, the portions exhibiting poor flatness at both edges of the film were cut off using a slitter, and the film was wound into a roll shape, thereby obtaining a heat-resistant polymer film F1 having a width of 450 mm by 500 m.

### <Fabrication of heat-resistant polymer film F2>

A heat-resistant polymer film F2 was obtained in the same manner as the heat-resistant polymer film F1 except that the polyamic acid solution A2 was used instead of the polyamic acid solution A1.

### <Fabrication of heat-resistant polymer film F3>

A heat-resistant polymer film F3 was obtained in the same manner as the heat-resistant polymer film F2 except **that the final film thickness was set to 15 µm.**

### <Fabrication of heat-resistant polymer film F4>

The polyamic acid solution A5 was applied to the smooth surface (lubricant-free surface) of a long polyester film ("A-4100" manufactured by TOYOBO CO., LTD.) having a width of 1050 mm using a slit die so that the final film thickness (film thickness after **imidization) was 25 µm,** dried at 105°C for 20 minutes, and then peeled off from the polyester film to obtain a self-supporting polyamic acid film having a width of 920 mm. The polyamic acid film obtained above was obtained, and then subjected to a heat treatment at 150°C for 5 minutes in the first stage, 220°C for 5 minutes in the second stage, and 495°C for 10 minutes in the third stage using a pin tenter for imidization, and the pin grips at both edges were removed by slitting to obtain a long polyimide film F5 (1000 m roll) having a width of 850 mm.

### <Fabrication of heat-resistant polymer film F6>

A heat-resistant polymer film F6 was obtained in the same manner as the heat-resistant polymer film F5 except that the polyamic acid solution A6 was used instead of the polyamic acid solution A5.

### <Fabrication of heat-resistant polymer film F8>

The polyimide solution B1 was adjusted and applied onto the lubricant-free surface of polyethylene terephthalate film A4100 (manufactured by TOYOBO CO., LTD.) using a comma coater so that the final film thickness was **25 µm.** The polyethylene terephthalate film A4100 was allowed to pass through a hot air furnace, wound up, and dried at 100°C for 10 minutes at this time. The polyamic acid film that gained self-supporting properties after drying was peeled off from the support, allowed to pass through a pin tenter with a pin sheet having pins disposed, and gripped by inserting the film edges into the pins, the pin sheet interval was adjusted so that the film did not break and unnecessary slackening did not occur, and the film was transported and heated at 200°C for 3 minutes, at 250°C for 3 minutes, and at 300°C for 6 minutes to evaporate the solvent. Thereafter, the film was cooled to room temperature for 2 minutes, the portions exhibiting poor flatness at both edges of the film were cut off using a slitter, and the film was wound into a roll shape, thereby obtaining a polyimide film B1 having a width of 450 mm by 500 m.

### <Fabrication of heat-resistant polymer film F9>

A heat-resistant polymer film F9 was obtained in the same manner as the heat-resistant polymer film F1 except that the polyamic acid solution A7 was used instead of the polyamic acid solution A1.

### <Fabrication of heat-resistant polymer film F10>

A heat-resistant polymer film F10 was obtained in the same manner as the heat-resistant polymer film F8 except that the polyimide solution B1 was changed to the polyamic acid solution A8.

### <Fabrication of heat-resistant polymer film F11>

A heat-resistant polymer film F11 was obtained in the same manner as the heat-resistant polymer film F8 except that the polyimide solution B1 was changed to the polyamic acid solution A9.

### <Fabrication of heat-resistant polymer film F12>

A heat-resistant polymer film F12 was obtained in the same manner as the heat-resistant polymer film F8 except that the polyimide solution B1 was changed to the polyamic acid solution A10.

### <Inorganic substrate>

A commercially available inorganic substrate was used.
OA-10G (manufactured by Nippon Electric Glass Co., Ltd., thickness: 0.5 mm, CTE: 3 ppm/K, and P-V value: 5 nm)

### <Surface roughness of inorganic substrate (P-V value measurement)>

The P-V value of the surface of the inorganic substrate to be bonded to the heat-resistant polymer was measured using E-Sweep (SII-NT). After the inorganic substrate was fixed to the sample stage, the static electricity was removed using a static electricity removing blower, and observation was performed. A Si-DF20 cantilever was used, and measurement was performed at 10 **points with an observation field of 5 µm × 5 µm, and the** average value was taken as the P-V value of the inorganic substrate.

### <Measurement of heat-resistant polymer film thickness>

The thickness of the heat-resistant polymer film was measured using a macrometer (Millitron 1245D manufactured by Feinpruf GmbH). The results are presented in Table 1. Regarding the heat-resistant polymer film F7, which was fabricated by applying a polyamic acid solution directly to an inorganic substrate and performing heating, the heat-resistant polymer film F7 was peeled from the inorganic substrate and its thickness was measured. Hereinafter, the heat-resistant polymer film F7 peeled from the inorganic substrate was similarly subjected to the measurement of film physical properties.

### <Tensile modulus of heat-resistant polymer film>

The heat-resistant polymer films F1 to F12 were cut into a strip shape of 100 mm × 10 mm in the machine direction (MD direction) and the transverse direction (TD direction), respectively to be used as test pieces. The tensile modulus in the MD direction and the TD direction were measured respectively at a tensile speed of 50 mm/min and a distance between chucks of 40 mm using a tensile tester (Autograph Model Name: AG-5000A manufactured by Shimadzu Corporation). The results are presented in Table 1.

### <Storage modulus of heat-resistant polymer film at 280°C>

Q800 manufactured by TA Instruments was used to measure the storage modulus of the laminate. The measurement was performed at an initial load of 0.02 N, a frequency of 10 Hz, a sample width of 5 mm, a chuck distance of 20 mm, and 5°C/min in a range of 30°C to 400°C, and the storage modulus at 280°C was measured.

### <Heat shrinkage rate of heat-resistant polymer film>

A strip-shaped sample of 15 × 20 cm was cut out from the heat-resistant polymer film at positions 10 cm from the L edge, center, and 10 cm from the R edge. This strip was subjected to humidity conditioning at 23°C and 50% RH for 24 hours, and then marked at intervals of 10 cm. After that, the strip was heated at 250°C for 1 hour, and subjected to humidity conditioning again at 23°C and 50% RH for 24 hours, and then the heat shrinkage rate was measured by measuring the intervals between marks. Regarding the heat-resistant polymer film F7, a strip-shaped sample of 15 × 20 cm was cut out from the center of the film. For length measurement, VISION MEASUREING MACHINE manufactured by Mitutoyo Corporation was used, and the measurement was performed by n = 2 for each kind of film. The results are presented in Table 1.

### <Coefficient of linear thermal expansion (CTE) of heat-resistant polymer film>

The expansion/contraction rate of the heat-resistant polymer films (polyimide films) F1 to F12 in the machine direction (MD direction) and the transverse direction (TD direction) was measured under the following conditions, the expansion/contraction rate/temperature was measured at intervals of 15°C, such as 30°C to 45°C and 45°C to 60°C, this measurement was performed up to 300°C, and the average value of all measured values was calculated as CTE. The results are presented in Table 1.
Instrument name; TMA4000S manufactured by MAC Science Corporation
Length of sample; 20 mm
Width of sample; 2 mm
Start temperature in temperature increase; 25°C
End temperature in temperature increase; 300°C
Rate of temperature increase; 5°C/min
Atmosphere; Argon

### <Total light transmittance>

The total light transmittance (TT) of the heat-resistant polymer film was measured using HAZEMETER (NDH5000 manufactured by NIPPON DENSHOKU INDUSTRIES CO., LTD.). A D65 lamp was used as the light source. The same measurement was performed 3 times and the arithmetic mean value thereof was adopted. The results are presented in Table 1.

### (Example 1)

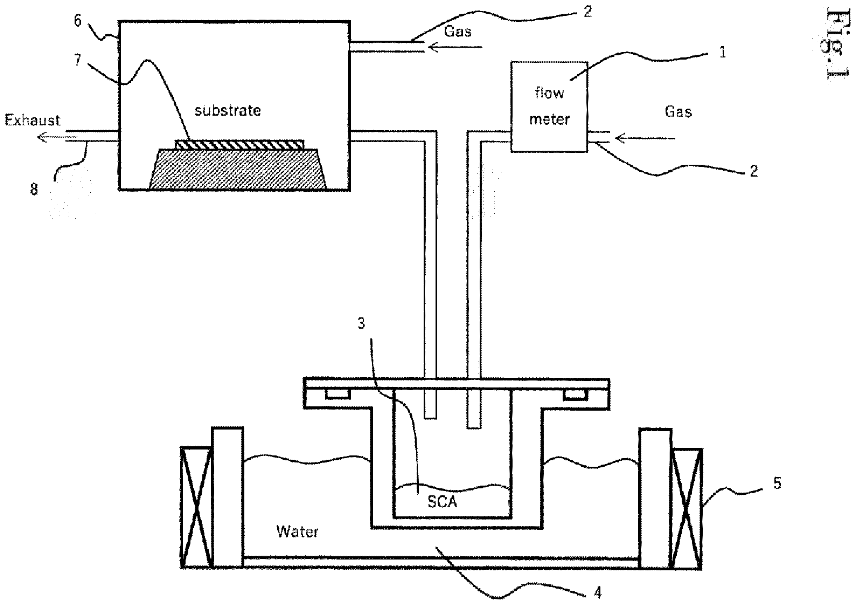

The application of a silane coupling agent to an inorganic substrate was performed using the apparatus illustrated in Fig. 1. Fig. 1 is a schematic diagram of an apparatus for applying a silane coupling agent to the inorganic substrate S1. An inorganic substrate having a size of 370 mm × 470 mm was used. The inorganic substrate was washed with pure water, dried, then irradiated using a UV/O3 irradiator (SKR1102N-03 manufactured by LANTECHNICAL SERVICE CO., LTD.) for 1 minute for dry cleaning, and used. Into a chemical tank having a capacity of 1 L, 150 g of 3-aminopropyltrimethoxysilane (silane coupling agent, Shin-Etsu Chemical KBM903) was put, and the outer water bath of this chemical tank was warmed to 43°C. The vapor that came out was then sent to the chamber together with clean dry air. The gas flow rate was set to 25 L/min and the substrate temperature was set to 24°C. The temperature of clean dry air was 23°C and the humidity thereof was 1.2% RH. Since the exhaust is connected to the exhaust port having a negative pressure, it is confirmed that the chamber has a negative pressure of about 10 Pa by a differential pressure gauge.

Next, the heat-resistant polymer film F1 (size of 360 mm × 460 mm) was bonded on the silane coupling agent layer to obtain a laminate. A laminator manufactured by MCK CO., LTD. was used for bonding, and the bonding conditions were set to compressed air pressure: 0.6 MPa, temperature: 22°C, humidity: 55% RH, and lamination speed: 50 mm/sec. This laminate was heated at 110°C for 10 minutes to obtain an inorganic substrate/heat-resistant polymer film laminate. The results are presented in Table 1. The heat-resistant polymer film F1 was colored and was not subjected to the measurement of total light transmittance.

### (Examples 2 to 6, 8, and 9 and Comparative Examples 1 to 3)

The same operation as in Example 1 was performed by changing the combination of an inorganic substrate and a heat-resistant polymer film. The combinations are presented in Table 1. The results are presented in Table 1. The heat-resistant polymer films F4 to F6 were colored and were not subjected to the measurement of total light transmittance.

### (Example 7)

The polyamic acid solution A1 was cast on a 370 mm × 470 mm inorganic substrate using a bar coater so that the **dry thickness was 25 µm, and dried in a hot air oven at** 90°C for 1 hour. Thereafter, the temperature was gradually increased to 400°C at a rate of 5°C/min, and heating was further performed for 10 min for imidization, thereby obtaining an inorganic substrate/heat-resistant polymer **film laminate having a thickness of about 25 µm.** The results are presented in Table 1. The heat-resistant polymer film F7 was colored and was not subjected to the measurement of total light transmittance.

### <Measurement of 90° adhesive strength (peel strength)>

For the laminate obtained as described above, the 90° peel strength between the inorganic substrate and the heat-resistant polymer film was measured.

The measurement conditions for 90° initial peel strength are as follows.

The film is peeled off from the inorganic substrate at an angle of 90°.

The measurement is performed 5 times and the average value thereof is taken as the measured value.
Measuring instrument; Autograph AG-IS manufactured by Shimadzu Corporation
Measured temperature; Room temperature (25°C)
Peeling speed; 100 mm/min
Atmosphere; Air
Width of measured sample; 2.5 cm

### <Measurement of shear peel strength>

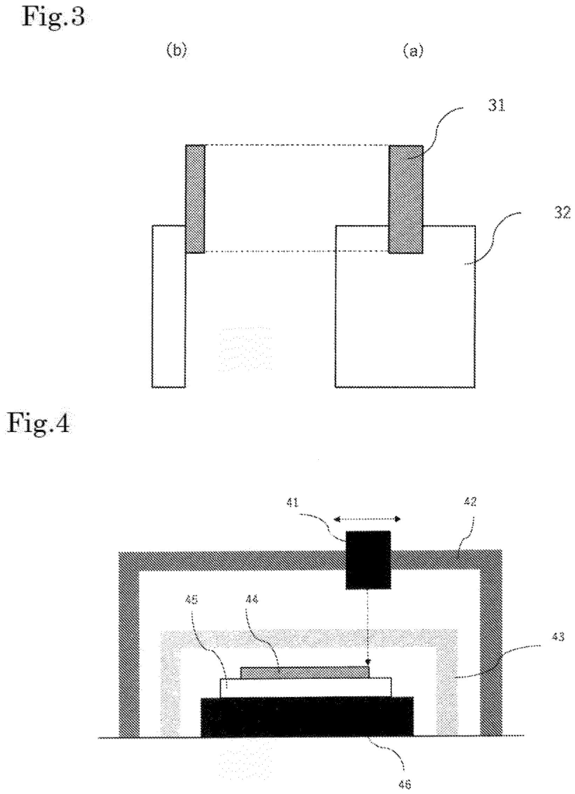

Regarding the laminate obtained as described above, only the inorganic substrate was cut and removed so that only 5 mm × 5 mm was left as illustrated in Fig. 3 and a chuck gripping margin was secured. The remaining inorganic substrate was fixed with the lower chuck of the tensile testing machine (Autograph Model Name: AG-5000A manufactured by Shimadzu Corporation), and the chuck gripping margin was gripped with the upper chuck, and the laminate was pulled at a speed of 100 mm/min to measure the shear peel strength. In a case where the heat-resistant polymer film was broken before being peeled off from the inorganic substrate, the value was measured as being equal to or higher than that value. The results are presented in Table 1.

### <Warpage of laminate>

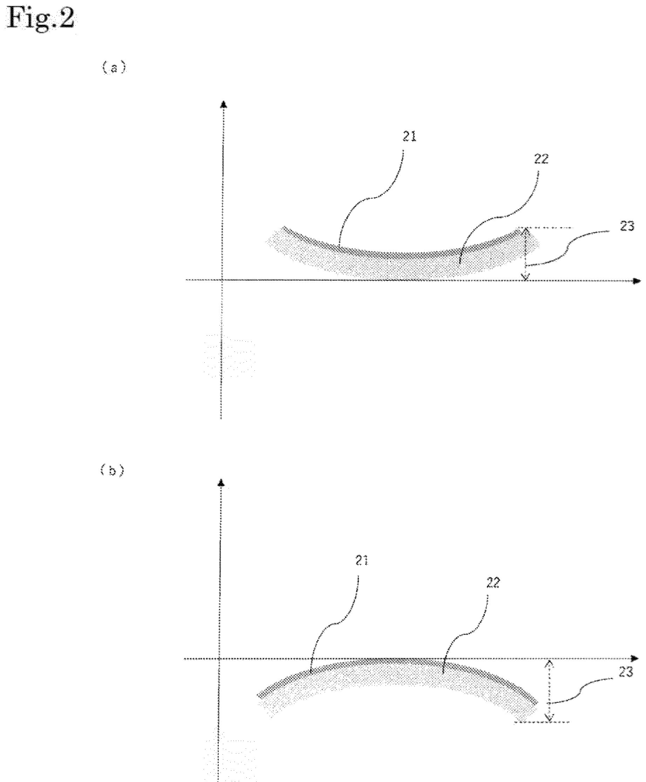

The warpage of the laminate at 280°C was measured using the apparatus illustrated in Fig. 4. A line was drawn with a black marker on the portion of the surface of the laminate where the displacement was to be measured (the portion directly under the slit of a slitted insulating cover 43). The laminate was placed on a hot plate 46 so that the inorganic substrate 45 side was in contact with the heating part of the hot plate, and heated to 280°C. At that time, the entire hot plate 46 was covered with the slitted insulating cover 43. One hour after the start of heating, the amount of warpage was measured using a laser displacement meter 41. The measurement was performed every 2 cm starting from the position 1 cm from the edge of the inorganic substrate. The amount of warpage was evaluated as illustrated in Fig. 2(a). The laser displacement meter used was LK-H-055 manufactured by KEYENCE CORPORATION, the measurement was performed by N = 3, and the average value thereof was taken as the amount of warpage. The results are presented in Table 1.

### <Peeling resistance during laminate handling>

The fabricated laminate was placed on the workbench with the film side facing down, and a suction lifter (manufactured by Bohole, 50 kg) was set so that the suction cups were aligned at the central part of the laminate in the short side direction. The handle of the suction lifter was grasped, the suction lifter was slowly lifted up and turned upside down so that the heat-resistant polymer film was on the top. After that, 90° direction changes were performed 10 times at a speed of 90°/s. The suction lifter was removed from the laminate, it was examined whether the heat-resistant polymer film and the inorganic substrate were peeled off from each other, and it was evaluated as × in a case where peeling off occurred and it was evaluated **as o in a case where there was no change compared to the** state before the test.

**[Table 1]**

| | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|
| Heat-resistant polymer film | F1 | F2 | F3 | F4 | F5 | F6 | F7 | F10 | F11 | F8 | F9 | F12 |
| shear peel strength (MPa) | 1.8 or more | 1.1 or more | 1.2 or more | 2.4 or more | 1.9 or more | 2.1 or more | 2 or more | 0.9 or more | 1 or more | 0.7 | 0.2 | 0.9 or more |
| Thickness of heat**-resistant polymer film (µm)** | 25 | 25 | 15 | 38 | 25 | 25 | 25 | 25 | 25 | 25 | 25 | 25 |
| CTE of heat-resistant polymer film (ppm/K) | 4.8 | 3 | 3 | 2 | 15 | 25 | 3 | 18 | 20 | 50 | 47 | 43 |
| Tensile modulus of heat-resistant polymer film (GPa) | 8 | 7.8 | 7.8 | 9 | 6 | 5 | 8 | 7 | 7.1 | 4 | 4 | 2.4 |
| Heat shrinkage rate of heat-resistant polymer film (%) | 0.02 | 0.03 | 0.04 | 0.01 | 0.03 | 0.03 | 0.02 | 0.04 | 0.04 | 0.08 | 0.03 | 0.04 |
| Total light transmittance of heat-resistant polymer film (%) | - | 85.3 | 85.3 | - | - | - | - | 87.3 | 86.4 | 87.1 | 84.2 | 83.2 |
| Diameter of circumscribed circle of inorganic substrate (mm) | 598 | 598 | 598 | 598 | 598 | 598 | 598 | 598 | 598 | 598 | 598 | 598 |
| Difference in CTE between inorganic substrate and heat-resistant polymer film (ppm/K) | 1.8 | 0 | 0 | 1 | 12 | 22 | 0 | 15 | 17 | 47 | 44 | 40 |
| Storage modulus of heat-resistant polymer film at 280°C (GPa) | 6.2 | 5 | 5 | 8 | 4 | 3 | 5.9 | 2.1 | 2.1 | 1.5 | 2.2 | 0.8 |
| Absolute value of warpage during heating at **280°C (µm)** | 12 | 10 | 10 | 10 | 50 | 240 | 11 | 80 | 120 | 380 | 330 | 310 |
| Peeling off due to handling | ○ | ○ | ○ | ○ | ○ | ○ | ○ | ○ | ○ | - | - | - |

### DESCRIPTION OF REFERENCE SIGNS

- 1: Flow meter
- 2: Gas inlet
- 3: Chemical tank (silane coupling agent tank)
- 4: Hot water tank (water bath)
- 5: Heater
- 6: Processing chamber (chamber)
- 7: Base material
- 8: Exhaust port
- 21: Heat-resistant polymer film
- 22: Inorganic substrate
- 23: Amount of warpage
- 31: Heat-resistant polymer film
- 32: Inorganic substrate
- 41: Laser displacement meter
- 42: Angle with rail
- 43: Slitted insulating cover
- 44: Heat-resistant polymer film
- 45: Inorganic substrate
- 46: Hot plate

## Claims

1. A laminate of a heat-resistant polymer film and an inorganic substrate formed substantially without using an adhesive, wherein
a shear peel strength between the heat-resistant polymer film and the inorganic substrate is 0.8 MPa or more, and
a tensile modulus of the heat-resistant polymer film is 4 GPa or more and 9 GPa or less.

2. The laminate according to claim 1, wherein **the laminate has an amount of warpage of 300 um or less** after being heated at 280°C for 1 hour.

3. The laminate according to claim 1 or 2, wherein a storage modulus of the heat-resistant polymer film at 280°C is 9 GPa or less.

4. The laminate according to any one of claims 1 to 3, wherein a diameter of a circumscribed circle of the laminate is 500 mm or more.

5. The laminate according to any one of claims 1 to 4, wherein the heat-resistant polymer film includes at least one selected from the group consisting of polyimide, polyamide, and polyamide-imide.

6. The laminate according to any one of claims 1 to 5, wherein the heat-resistant polymer film is a transparent polyimide film.
